# EUROPEAN PATENT SPECIFICATION

(11) **EP 0 771 052 B1**
(45) Date of publication and mention of the grant of the patent: **14.10.1998**
(21) Application number: 97200093.9
(22) Date of filing: 01.08.1991
(51) Int. Cl.: H01R 13/52, H04Q 1/02

(54) **Telephone line connector**
Fernsprechleitungsstecker
Connecteur de ligne téléphonique

(30) Priority: 04.09.1990 US 579006; 17.09.1990 US 584325
(43) Date of publication of application: 02.05.1997
(62) Divisional of application: 95201384.5
(73) Proprietor: RAYCHEM CORPORATION, Menlo Park California 94025 (US)
(72) Inventor: Bliven, David C., San Jose, California 95129 (US); Vranicar, Anthony, Santa Clara, California 95051 (US); Vail, Philip B., San Leandro, California 94578 (US); Shimirak, Gerald L., Danville, California 94526 (US); Mullaney, Julian S., Raleigh, North Carolina 27612 (US); Erreygers, Jan J., 2180 Kalmthout (BE)
(74) Representative: Clayton, Anthony Nicholas

(56) References cited:
- EP-A- 0 127 349
- EP-A- 0 213 874
- FR-A- 2 583 314
- GB-A- 589 697
- US-A- 4 562 311
- US-A- 4 588 238
- US-A- 4 662 692

## Description

The present invention relates to mechanical enclosures for telephone line equipment, and in particular, telephone line connectors.

Limitations with the mechanical enclosures for telephone equipment at customer facilities have been encountered. Some enclosures have provided insufficient weather protection. Some enclosures have provided only limited access to frequently used components, have been excessively complex, utilize expensive components or fabrication techniques, or combinations of the above.

Problems have also arisen in connection with test ports for customer telecommunictions equipment such as remote terminals at customer facilities. It is often desirable to provide an RJ11 connector of the type well known to those of skill in the art, or other such connector, at an external loction at subscriber facilities such as a junction box leading to a house or a remote terminal of the type described above. Previously, such access is provided by installing a female RJ11 socket at such locations which is normally connected to a male RJ11 plug. The tip and ring wires (among others in some cases) lead from the female RJ11 socket, and connect to tip and ring connections in the male RJ11 plug, thereafter leading into the subscriber facility. When it is desired to connect test equipment to the RJ11 female socket, the plug is removed, and another male RJ11 is inserted into the female socket, thereby providing tip and ring connections for the test equipment.

problems have arisen with such arrangements, however. For example, it is sometimes difficult to establish and maintain an adequate environmental seal in a removable male RJ11 plug, particularly when wires lead from the male RJ11 plug. Accordingly, moisture and other environmental contaminants are allowed to enter such plugs, sometimes resulting in corrosion and/or failure of the connection of the tip and ring connections in the socket/plug combination.

It is desirable to provide an improved protection system for such equipment, as well as test access to customer equipment.

United States Patent No. 4,662,692 discloses a termination block sealing member which includes a continuous layer of insulating gel enclosed around its perimeter by a plastic container such that exposed faces of the gel are open, one exposed face being disposed adjacent a termination block, with another exposed face being oriented such that any one of a plurality of electrical contact pins can be pierced therethrough so as to make contact with terminations in the termination block.

United States Patent No. 4,425,017 discloses a plug and socket connection assembly comprising male and female connectors. The female connector includes a contact chamber which is sealed by an elastomeric diaphragm and which is filled with a gel composition. Female socket contacts extend into the gel filled chamber.

The present invention provides a connector, comprising:
(a) a socket containing electrical contacts; and
(b) a gel sealant provided inside the socket for environmentally sealing the socket, the gel sealant encapsulating the electrical contacts;
   characterised in that the connector is a telephone line connector, and the encapsulated electrical contacts are flexible.

The gel sealant preferably has a cone penetration value of 50 to 350 x 10⁻¹mm and an ultimate elongation of at least 50%. The gel sealant preferably comprises a urethane, a silicone, or a styrene-ethylene-butylene-styrene.

An improved enclosure for a remote terminal is also disclosed. The enclosure includes a modular, sealed case for electronic components mounted on one or more circuit boards. The sealed case is preferably downwardly facing and mounted on a second enclosure. The second enclosure includes a first, user-accessible section and a second, restricted-access section. The user-accessible section is covered by a first door and the restricted access section is covered by a door having a limited access closure device such as a protected fastener, lock, one-way screw, or the like.

An improved test access port is also disclosed, especially for use in conjunction with the remote terminal in one embodiment. In a preferred embodiment the test access port includes, for example, a male plug and female RJ11 socket. Such connectors include tip and ring connections on, for example, the third and fourth terminals of the socket and plug.

In one preferred embodiment a male, dummy plug is provided for installation in the female test socket when the socket is not being used for attachment of test equipment. The male plug shorts or shunts the tip connection of the female RJ11 to, for example, the first terminal of the female RJ11 socket. The male dummy plug also shorts the ring connection of the female RJ11 socket to, for example, the sixth terminal of the RJ11 socket. The first and sixth terminals of the female socket are then connected electrically via, for example, a terminal block, to the wires leading into a home, office, or other subscriber location. The arrangement allows access to the female test socket for maintenance operations while allowing the system to be more effectively sealed from environmental contaminants during normal operations. The female plug, preferably a region-surrounding the perimeter of the female plug, and/or preferably a cap structure around the male plug, are filled with gel sealant for further environmental protection.

A further understanding of the nature and advantages of the invention may be had with reference to the following figures and description.

### BRIEF DESCRIPTION OF THE FIGURES

Fig. 1 is an isometric drawing illustrating the RT housing in a closed position;
Fig. 2 is an isometric view of the RT housing with open access doors;
Fig. 3 is a detailed front view of one embodiment of the customer and telephone company equipment compartments;
Fig. 4 is a mechanical illustration of the test access port at the RT or other subscriber equipment; and
Figs. 5a and 5b are simplified wiring diagrams schematically illustrating operation of the test access port.

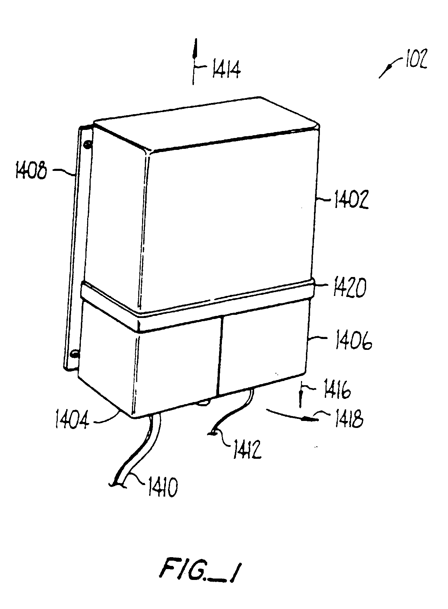

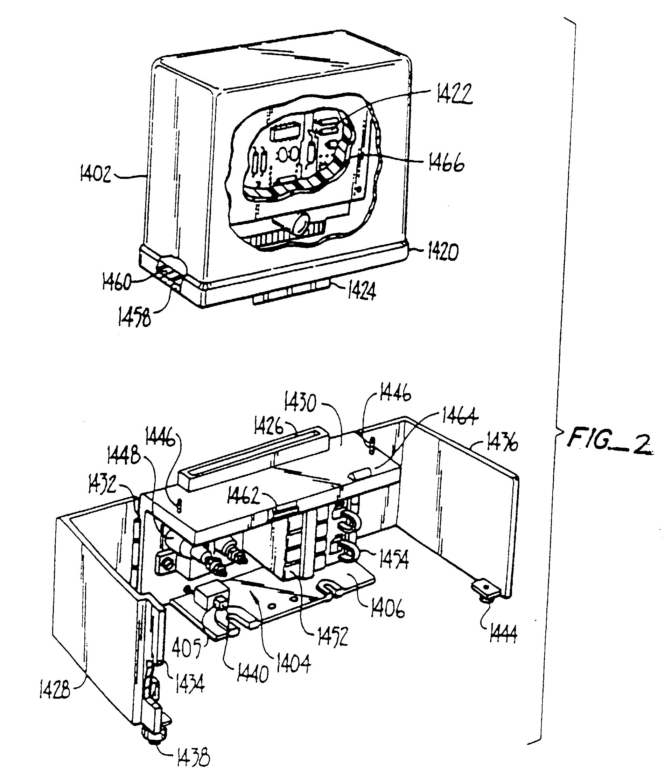

The RT (Remote Terminal) electronics will often be located in an unprotected environment at a user location. Access to various portions of the RT is desirably limited. Figs. 1 and 2 illustrate an enclosure which will find particular application with the RT disclosed herein.

As shown in Fig. 1, the enclosure includes an RT electronics case 1402, a telephone company equipment compartment 1404, and a customer line compartment 1406. The three portions of the enclosure are mounted to, for example, a wall, pole, or any other convenient location via a mounting plate 1408.

The electronics case houses the PCB containing the various electronic components used in D/A and A/D conversion. The telephone company equipment compartment contains one or more terminal blocks connected to a drop wire 1410 containing one or more DSL's (Digital Subscriber Lines). The customer line compartment houses one or more customer blocks for connection of subscriber equipment lines 1412.

The electronics case is preferably a modular plug-in unit which lifts directly off of and away from the lower portions of the enclosure, as indicated by the arrow 1414. A door over the customer line enclosure is hinged to drop down in the direction of arrow 1416 and then out in the direction of arrow 1418. A door over the telephone company equipment enclosure 1404 is similarly hinged. A skirt 1420 extends outward and downward from the electronics case and over the telephone company equipment compartment and the customer line compartment so as to prevent the influx of rainfall and the like in one embodiment. In a preferred embodiment, the entire case is sized to fit over the doors, rendering the skirt unnecessary. Downward movement of the doors to the two compartments 1404 and 1406 allows overhang of the skirt 1420 while also allowing access to the two compartments without removal of the case 1402.

Fig. 2 illustrates the enclosure in greater detail with the case 1402 lifted from its base and with the two compartment doors open. The case 1402 is shown partially cut away. As shown, the case 1402 encloses PCB 1422 which contains various components along with their interconnections. Interconnections to the terminal blocks in the telephone company compartment 1404 and customer compartment 1406 are made via a multiple conductor plug 1424 and socket 1426 of the type well known to those of skill in the art.

In one preferred embodiment, the PCB is mechanically connected to the case 1402 and lifts away from the connector 1426 when the case is lifted away therefrom. In most preferred embodiments, the multiple conductor socket is at least partially filled with an environmental sealant. A wide variety of sealants are available for this use, including, for example, hot melts, but preferably including epoxies and dielectric gels such as urethanes, silicones, and styrene-ethylenebutylene-styrenes, including those disclosed in U.S. Patent Nos. 4,634,207, 4,600,261, 4,643,924, 4,865,905, 4,662,692, and 4,942,270. Preferred gels used in conjunction with the present invention include those having a cone penetration value of 50 to 350x10⁻¹ mm, preferably 100 to 300x10⁻¹ mm, and most preferably 100 to 250x10⁻¹ mm. Preferred gels also have an ultimate elongation of at least 50%, preferably at least 100%, and most preferably at least 200%. Such gels may be utilized by forming the gel directly in the socket or in other forms such as with tape such as those sold under the name GelTek™ by Raychem Corporation.

In preferred embodiments, the bottom portion of the case 1402 is sealed with a plate 1458, as shown in the cut-away portion of Fig. 2. Above the plate 1458, the case is further sealed with hot melt 1460. Preferably, the case is filled with between 1/64" and 1/8" hot melt or mastic, preferably having good adhesion to metal properties at low temperatures (e.g., 0°C) and not becoming brittle at low temperatures. Hot melt suitable for this purpose is preferably type number S1149 made by Raychem Corporation. In preferred embodiments the bottom of the case is sealed with hot melt although gels such as those described in the above incorporated patents may be used in some embodiements.

The door of the telephone company compartment 1428 is mounted to a frame 1430 with drop hinges 1432. Drop hinges allow the door to move both upward and downward, as well as allowing the door to swing open and shut. The door 1438 includes a lip 1434 which extends under a customer equipment door 1436 when the doors are in the closed position. This prevents encroachment of water from rain, as well as other environmental encroachments.

Door 1428 is provided with a protected fastener 1438 which engages the frame 1430 at a mounting point 1440. The protected fastener is designed to limit customer access to the telephone company compartment 1404. Protected fasteners that will find use in conjunction with the invention include one-way screws, twisted wires with seals which are destroyed when the door 1428 is opened, key locks, screws with heads accessible only with specialized tools, and the like. By contrast, customer compartment door 1436 is fastened to the frame 1430 with a conventional and readily utilized fastener 1444, such as a conventional screw, bolt, wing nut, friction fitting, or the like. Accordingly, a customer is provided ready access to compartment 1406, while only the telephone company has ready access to compartment 1404.

In some embodiments case 1402 is held to the frame 1430 by only the socket 1426, although in some embodiments one or more bolts or other fasteners 1446 extend through the frame and into the case. As shown, one of the bolts is connected to the frame in the telephone company compartment 1404 and, accordingly, removal of the case is limited to only those having access to the compartment 1404.

Inside the telephone company compartment 1404, terminal blocks 1448 are mounted to frame 1430. Terminal block 1448 serves as an interface between socket 1426 and a twisted pair wire entering the customer facility. According to one preferred embodiment, the terminal block 1448 is a Raychem DTerminator™, Protected DTerminator™, or the like.

Inside the customer compartment 1406 a customer terminal block 1450 is mounted to frame 1430. Customer terminal block 1450 preferably includes both screwed terminal connections 1452 and modular, plug-in connections 1454. Customer terminal block 1450 serves as an interface between socket 1426 and wires leading to subscriber equipment in the customer's facility. In most preferred embodiments, both of terminal blocks 1448 and 1450 are protected with terminal block caps filled with a gel such as the gels used in the socket 1426.

In the particular embodiment shown in Fig. 2, the modular plug in connections 1454 such as RJ11 connections include a male and female side. In normal operation, the male and female portions are connected and telephone signals to the subscriber equipment are transmitted over two or more wire conductors therein. When it is desirable to perform maintenance or check the subscriber equipment at the RT, the male side is disconnected and the test equipment, such as a phone used for testing, is plugged into the female side of the plug. Upon completion of the testing activities, the male plug in the RT is reinserted into the female side, reestablishing a connection with the subscribers equipment.

The enclosure provides a customer ready access to portions of the RT which require customer service. At the same time, the enclosure provides reliable environmental protection to the electronics of the RT, as well as the interfaces to the DSL and subscriber lines. The RT electronics are compartmentalized in the case 1402 such that when a failure of the RT electronics is detected, the entire case is simply removed and replaced with a new unit. A switch 405 detects opening of the telephone company compartment and reports such conditions via the test system.

The case, the customer compartment and/or the telephone compartment may be provided with additional environmental sealing using, for example, the gels mentioned in conjunction with the socket 1426.

For example, according to one embodiment a strip of environmental sealant (a section of which is illustrated by reference numeral 1462) is provided around the edges of the frame where the frame meets the doors 1428 and 1436. According to further embodiments, a strip of environmental sealant is provided along the top perimeter of the frame where the frame will meet the case (as illustrated by the section of sealant 1464). Sealant 1466 may optionally be provided in the case 1402 against the PCB 1422 to provide shock resistance and corrosion resistance for the components therein.

In normal operation, the enclosure is utilized in the configuration shown in Fig. 1. If the subscriber needs access to the customer compartment, the fastener 1444 is disengaged, the door is dropped to the lower limits of the hinges, and the door is swung open. The subscriber removes terminal covers (if any) from the terminal block and performs any required operations to the customer compartment. Access to the telephone company compartment is restricted due to the fastener 1438. Similarly, removal of the case 1402 and attendant electronics is restricted because the subscriber cannot access the fastener 1446 in the compartment 1404.

If the telephone company requires access to the terminal blocks 1448, the restricted fastener 1438 is released, the door is dropped to the bottom limits of its hinges (to clear the skirt 1420) and the door is swung open. If a failure of the RT electronics is detected by the test system, the case is released from the frame 1430 by releasing the fasteners 1446. According to preferred embodiments, rather than attempting service of any individual electronic component of the RT the entire case, including the enclosed electronics and gel sealant, is removed from the frame and replaced with a new case and electronics. According to alternative embodiments, the case is sealed to the frame with a gasket or seal, and lifts away from the frame without the internal electronics. In such embodiments the gels described in the above-incorporated patents are used for sealing and are placed in a trough which is engaged by the bottom of the case. The RT PCB or any particular component thereon is then appropriately replaced or serviced.

In preferred embodiments, each of the internal electronics and interconnections in the customer accessible compartment and telephone company accessible compartment are sealed individually, rendering sealing of the doors unnecessary. The frame is preferably self draining to weep holes or the like, preventing accumulation of moisture in the enclosure.

The enclosure arid its various components may be made from any one of a wide variety of materials. Preferred among such materials are sheet metal, plastic, and the like.

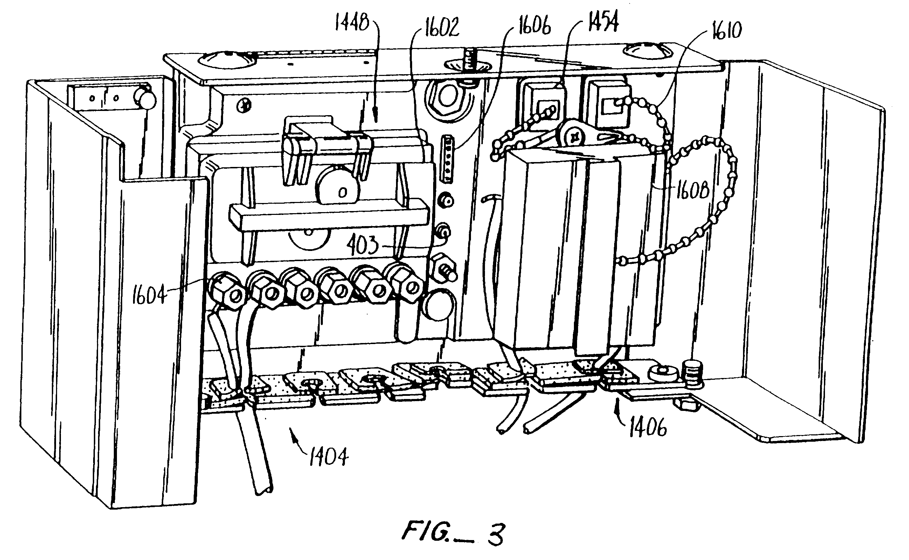

Fig. 3 illustrates one embodiment of the bottom portion of the RT enclosure in greater detail. As shown the telephone company compartment encloses terminal block 1448. The terminal block 1448 is preferably formed with an upper portion 1602 and a lower portion 1604. The upper portion is shown in Fig. 3 with a cover thereon which encloses one or more of the above-described gels. The lower portion 1604 provides a connection to the drop wires.

The telephone company compartment further includes a maintenance interface 1606 such as a five-pin plug, as well as indicator lights 403.

In the customer compartment 1406, terminal block 1452 is shown with a gel-filled cover 1608 thereon. In the preferred embodiment shown in Fig. 3, wires need not extend from the male side of the RJ11 connector, using the "dummy" male connector described below. Optionally, a grasping means, such as a stiff piastic string 1610, is connected to the male side of the "dummy" RJll test connection, allowing it to be easily removed from the female side.

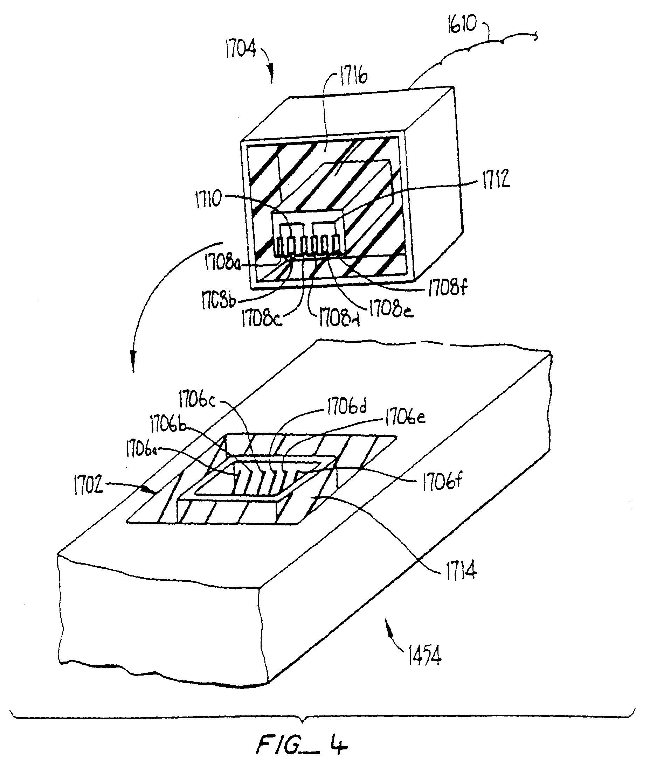

Fig. 4 illustrates the test port 1454 in greater detail according to one embodiment of the invention. In the particular embodiment shown in Fig. 4 the port includes a female, preferably RJ11, socket or jack 1702 and a male plug 1704. The male plug is inserted into the female socket for normal operation of the system by a subscriber. During testing operations, such as when service personnel desire to connect a phone at the RT for monitoring operations at the RT, the male dummy plug is removed and a conventional RJ11 connector is inserted into the female side 1702.

In the embodiment shown in Fig. 4 an RJ11 plug is used which contains six connectors such as 1706a, 1706b, 1706c, 1706d, 1706e, and 1706f. In the embodiment shown in Fig. 4 the third contact 1706c is the ring wire which provides signals which ultimately are generated at the CO (Central Office). Similarly, the fourth contact 1706d is the tip contact which provides signals which are ultimately generated at the CO. In the particular embodiment shown in Fig. 4 the first contact 1706a is connected to the ring line which leads into the home, office, or other subscriber facility. The sixth contact 1706f is connected to the tip line which leads into the home, office, or other subscriber facility.

The male RJ11 plug 1704 is referred to herein as a "dummy" connection because it does not contain wires that extend from the male connection to subscriber equipment or elsewhere. The dummy male connector preferebly includes slots 1708a-f for receiving the contacts 1706a-f. A first conductor 1710 such as a copper or aluminum strip or wire 1710 inside the male RJll electrically connects the first pin 1706a and the third pin 1706c of the female RJll when the male plug is inserted into the female plug. Similarly a second conductor 1712 in the male RJll electrically connects the fourth pin 1706d and the sixth pin 1706f of the female RJ11 when the male plug is inserted. It will be recognized that the conductors 1712 and 1710 could take on any one of a number of forms such as wires, deposited metal, separate metal strips, or the like. Accordingly, when the dummy male RJ11 is inserted into the female RJ11, a tip connection and ring connection between the subscriber facility and the CO (via the RT in the particular embodiment herein) is established.

Since wires need not extend from the body of the male RJ11 to an external location, environmental sealing is greatly simplified. Accordingly, in preferred embodiments gels such as those described in the above incorporated patents are provided in one or more of the inside of the female RJ11 1701, the inside portion of the male RJ11 1704, a trench 1714 around the perimeter of the female RJ11, and/or a trench formed by a cap 1716 around the male RJ11. For merely the purpose of illustration herein, the gel is shown only in the trench 1714 and in the cap 1716.

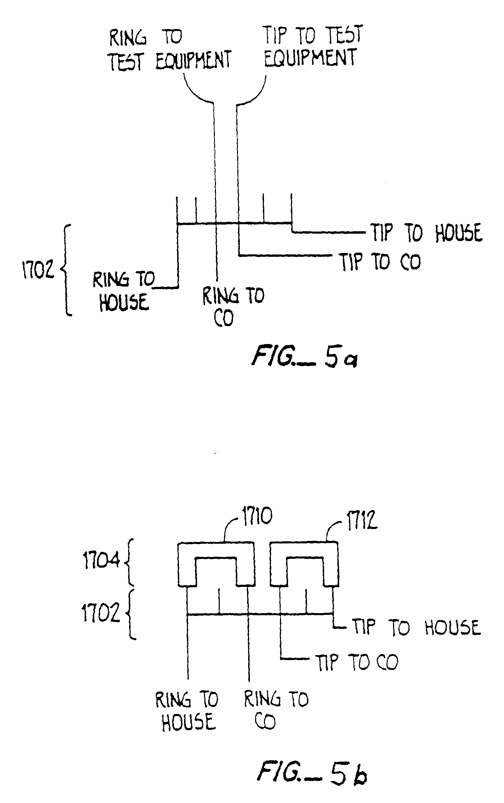

Figs. 5a and 5b illustrate the electrical connections made during test and normal operations modes, respectively, with the RJ11 arrangement herein. As shown in Fig. 5a during test operations a conventional RJ11 plug is used to connect test equipment to the tip and ring lines ultimately leading to the CO. The tip and ring lines leading to the home or office are disconnected. As shown in Fig. 5b when the male dummy plug 1704 is installed, the ring line leading to the CO is directly connected to the ring line leading into the house, and the tip line leading to the CO is directly connected to the tip line leading to the house.

## Claims

1. A connector (1454), comprising:
(a) a socket (1702) containing electrical contacts (1706); and
(b) a gel sealant provided inside the socket for environmentally sealing the socket, the gel sealant encapsulating the electrical contacts (1706);
characterised in that the connector (1454) is a telephone line connector, and the encapsulated electrical contacts (1706) are flexible.

2. A connector (1454) according to Claim 1, further comprising a plug (1704) which, for normal operation, is inserted in the socket (1702), and which has electrical contacts (1708) which are electrically connected to the flexible electrical contacts (1706) in the socket when the plug is so inserted.

3. A connector (1454) according to Claim 1 or Claim 2, which comprises an RJ11 or similar jack connector.

4. A connector (1454) according to any preceding claim, which comprises a test access port.

5. A connector (1454) according to any preceding claim, in which the flexible electrical contacts (1706) comprise tip and ring contacts.

6. A connector (1454) according to any preceding claim, in which the socket includes a trench around its perimeter, in which additional gel sealant is provided.

7. A connector (1454) according to Claim 2 or any one of claims 3 to 6 when dependent upon Claim 2, in which further gel sealant is provided in a trench formed by a cap (1716) around the plug (1704).

8. A connector (1454) according to any preceding claim, in which the gel sealant has a cone penetration value of 50 to 350 x 10⁻¹mm and an ultimate elongation of at least 50%.

9. A connector (1454) according to any preceding claim, in which the gel comprises a urethane, a silicone, or a styrene-ethylene-butylene-styrene.

10. An enclosure for a telecommunications remote terminal, including a connector (1454) according to any preceding claim.

## Patentansprüche

1. Verbinder (1454), der folgendes aufweist:
(a) eine Buchse (1702), die elektrische Kontakte (1706) enthält, und
(b) eine Gel-Dichtungsmasse, die innerhalb der Buchse vorgesehen ist, um die Buchse gegenüber der Umgebung abzudichten, wobei die Gel-Dichtungsmasse die elektrischen Kontakte (1706) einkapselt,
dadurch gekennzeichnet,
daß der Verbinder (1454) ein Telefonleitungs-Verbindungselement ist und die eingekapselten elektrischen Kontakte (1706) flexibel sind.

2. Verbinder (1454) nach Anspruch 1,
der weiterhin einen Stecker (1704) aufweist, der für einen normalen Betrieb in die Buchse (1702) eingesteckt wird und der elektrische Kontakte (1708) hat, die mit den flexiblen elektrischen Kontakten (1706) in der Buchse elektrisch verbunden sind, wenn der Stecker so eingesteckt ist.

3. Verbinder (1454) nach Anspruch 1 oder 2,
der einen RJ11-Verbinder oder einen ähnlichen verborgenen Verbinder aufweist.

4. Verbinder (1454) nach einem der vorhergehenden Ansprüche, der einen Prüfzugangs-Anschluß aufweist.

5. Verbinder (1454) nach einem der vorhergehenden Ansprüche, wobei die flexiblen elektrischen Kontakte (1706) Signalleitungs- und Meldeleitungskontakte aufweisen.

6. Verbinder (1454) nach einem der vorhergehenden Ansprüche, wobei die Buchse einen Graben um ihren Umfang herum aufweist, in dem zusätzliche Gel-Dichtungsmasse vorgesehen ist.

7. Verbinder (1454) nach Anspruch 2 oder einem der Ansprüche 3 bis 6, falls von Anspruch 2 abhängig,
wobei weitere Gel-Dichtungsmasse in einem Graben vorgesehen ist, der von einer sich um den Stecker (1704) herum erstreckenden Kappe (1716) gebildet ist.

8. Verbinder (1454) nach einem der vorhergehenden Ansprüche, wobei das Gel-Dichtungsmittel einen Konuspenetrationswert von 50 bis 350 x 10⁻¹ mm und eine Bruchdehnung von mindestens 50 % hat.

9. Verbinder (1454) nach einem der vorhergehenden Ansprüche, wobei das Gel Urethan, Silikon oder Styrol-Ethyl-Butyl-Styrol aufweist.

10. Gehäuse für einen entfernt angeordneten Telekommunikationsanschluß, das einen Verbinder (1454) gemäß einem der vorhergehenden Ansprüche aufweist.

## Revendications

1. Connecteur (1454) comportant :
(a) une douille (1702) contenant des contacts électriques (1706) ; et
(b) une matière d'étanchéité du type gel placée à l'intérieur de la douille pour sceller la douille de façon étanche à l'environnement, la matière d'étanchéité du type gel enrobant les contacts électriques (1706) ;
caractérisé en ce que le connecteur (1454) est un connecteur de ligne téléphonique, et les contacts électriques enrobés (1706) sont flexibles.

2. Connecteur (1454) selon la revendication 1, comportant en outre une fiche (1704) qui, pendant un fonctionnement normal, est insérée dans la douille (1702), et qui comporte des contacts électriques (1708) qui sont connectés électriquement aux contacts électriques flexibles (1706) situés dans la douille lorsque la fiche est ainsi insérée.

3. Connecteur (1454) selon la revendication 1 ou la revendication 2, qui comporte un connecteur de jack RJ11 ou similaire.

4. Connecteur (1454) selon l'une quelconque des revendications précédentes, qui comporte un port d'accès pour essai.

5. Connecteur (1454) selon l'une quelconque des revendications précédentes, dans lequel les contacts électriques flexibles (1706) comprennent des contacts de pointe et de nuque.

6. Connecteur (1454) selon l'une quelconque des revendications précédentes, dans lequel la douille comprend une tranchée le long de son périmètre, dans laquelle une matière d'étanchéité du type gel, supplémentaire, est placée.

7. Connecteur (1454) selon la revendication 2 ou l'une quelconque des revendications 3 à 6, lorsqu'elle dépend de la revendication 2, dans lequel une quantité supplémentaire de matière d'étanchéité du type gel est placée dans une tranchée formée par un chapeau (1716) autour de la fiche (1704).

8. Connecteur (1454) selon l'une quelconque des revendications précédentes, dans lequel la matière d'étanchéité du type gel présente une valeur de pénétration de cône de 50 à 350x10⁻¹ mm et un allongement à la rupture d'au moins 50 %.

9. Connecteur (1454) selon l'une quelconque des revendications précédentes, dans lequel le gel comprend un uréthanne, une silicone ou un styrène-éthylène-butylène-styrène.

10. Enceinte pour un terminal éloigné de télécommunications, comprenant un connecteur (1454) selon l'une quelconque des revendications précédentes.
